# EUROPÄISCHE PATENTANMELDUNG

(11) **EP 1 870 952 A2**
(43) Veröffentlichungstag der Anmeldung: **26.12.2007**
(21) Anmeldenummer: 07007582.5
(22) Anmeldetag: 13.04.2007
(51) Int. Cl.: H01M 8/24, H01M 8/02

(54) **Brennstoffzellenstapel**

(30) Priorität: 21.06.2006 DE 102006028439
(71) Anmelder: ElringKlinger AG, 72581 Dettingen (DE)
(72) Erfinder: Fritz, Wolfgang, 72555 Metzingen (DE); Maier, Uwe, 72760 Reutlingen (DE)
(74) Vertreter: Hoeger, Stellrecht & Partner Patentanwälte

(57) **Zusammenfassung**

Um einen Brennstoffzellenstapel, umfassend mehrere längs einer Stapelrichtung aufeinanderfolgende Brennstoffzelleneinheiten und mindestens eine Spannvorrichtung, mittels welcher die Brennstoffzelleneinheiten gegeneinander verspannt werden, zu schaffen, welcher eine besonders gute Einleitung der Verspannungskräfte in den Stapel der Brennstoffzelleneinheiten ermöglicht, wird vorgeschlagen, dass die Spannvorrichtung mindestens ein streifen- oder bandförmiges Zugelement umfasst, das eine Zugkraft für die Verspannung der Brennstoffzelleneinheiten überträgt und sich um mindestens eine Stirnseite des Brennstoffzellenstapels herum erstreckt.

## Beschreibung

Die vorliegende Erfindung betrifft einen Brennstoffzellenstapel, der mehrere längs einer Stapelrichtung aufeinanderfolgende Brennstoffzelleneinheiten und mindestens eine Spannvorrichtung, mittels welcher die Brennstoffzelleneinheiten gegeneinander verspannt werden, umfasst.

Ein solcher Brennstoffzellenstapel ist beispielsweise aus der DE 100 44 703 A1 bekannt.

Bei bekannten Brennstoffzellenstapeln dieser Art umfasst die Spannvorrichtung mehrere Zuganker, mittels welcher massive Endplatten des Brennstoffzellenstapels gegeneinander gezogen werden, um die im Betrieb des Brennstoffzellenstapels erforderlichen Dicht- und Kontaktkräfte auf die Brennstoffzelleneinheiten aufzubringen.

Aus der DE 10 2004 037 678 A1 ist es bekannt, die Zugelemente, mittels welcher die Endplatten eines Brennstoffzellenstapels gegeneinander verspannt werden, als Stab, Seil, Draht, Kette, Band oder Fasermaterial auszuführen.

Der vorliegenden Erfindung liegt die Aufgabe zugrunde, einen Brennstoffzellenstapel der eingangs genannten Art zu schaffen, welcher eine besonders gute Einleitung der Verspannungskräfte in den Stapel der Brennstoffzelleneinheiten ermöglicht.

Diese Aufgabe wird bei einem Brennstoffzellenstapel mit den Merkmalen des Oberbegriffs von Anspruch 1 erfindungsgemäß dadurch gelöst, dass die Spannvorrichtung mindestens ein streifen- oder bandförmiges Zugelement umfasst, das eine Zugkraft für die Verspannung der Brennstoffzelleneinheiten überträgt und sich um mindestens eine Stirnseite des Brennstoffzellenstapels herum erstreckt.

Dadurch, dass sich das streifen- oder bandförmige Zugelement um eine Stirnseite des Brennstoffzellenstapels herum erstreckt, können die Spannkräfte von dem Zugelement großflächig und gleichmäßig verteilt über die betreffende Stirnseite des Brennstoffzellenstapels in die Brennstoffzelleneinheiten eingeleitet werden. Dadurch wird eine bessere Kraftverteilung erreicht als mit Zugmitteln, die nur am Rand der Endplatten des Brennstoffzellenstapels angreifen.

Ferner weist das streifen- oder bandförmige Zugelement nur ein geringes Gewicht auf und benötigt nur wenig Platz. Solche streifen- oder bandförmige Zugelemente sind ferner einfach und rasch zu montieren und kostengünstig in der Beschaffung.

Der erfindungsgemäße Brennstoffzellenstapel kann Hochtemperatur- Brennstoffzelleneinheiten (beispielsweise vom SOFC(Solid Oxide Fuel Cell)-Typ) oder auch Niedertemperatur- Brennstoffzelleneinheiten (beispielsweise vom PEM(Polymere Electrolyte Membrane)-Typ oder vom DMFC(Direct Methanol Fuel Cell)-Typ) umfassen.

Die mindestens ein streifen- oder bandförmiges Zugelement umfassende Spannvorrichtung dient vorzugsweise zum Aufbringen der erforderlichen Dicht- und Kontaktkräfte im Betrieb des Brennstoffzellenstapels, kann aber auch nur zur Transportsicherung dienen (im letzteren Falle kann die Spannvorrichtung vor der Inbetriebnahme des Brennstoffzellenstapels entfernt werden).

Bei einer bevorzugten Ausgestaltung der Erfindung ist vorgesehen, dass die Spannvorrichtung mindestens zwei band- oder streifenförmige Zugelemente umfasst, die sich um mindestens eine Stirnseite des Brennstoffzellenstapels herum erstrecken und in einer quer zur Stapelrichtung verlaufenden Richtung voneinander beabstandet sind.

Der Brennstoffzellenstapel kann mindestens ein Stapelendelement umfassen, das eine stirnseitige Begrenzung des Brennstoffzellenstapels bildet.

Ein solches Stapelendelement kann insbesondere als eine Endplatte ausgebildet sein.

Vorzugsweise erstreckt sich in diesem Falle mindestens ein Zugelement um mindestens ein Stapelendelement des Brennstoffzellenstapels herum.

Dabei ist es günstig, wenn mindestens ein Zugelement an mindestens einem Stapelendelement, insbesondere im wesentlichen flächig, anliegt, um eine gute Krafteinleitung von dem Zugelement in das Stapelendelement zu gewährleisten.

Das verwendete band- oder streifenförmige Zugelement ist vorzugsweise flexibel ausgebildet, so dass es sich an ein Stapelendelement beliebiger Gestalt anschmiegen kann.

Um das Zugelement unter Zugspannung zu setzen, kann vorgesehen sein, dass das Zugelement an mindestens einem Stapelendelement festgelegt ist.

Dabei kann das Zugelement beispielsweise stoffschlüssig und/oder mittels mindestens eines Befestigungsmittels, insbesondere mittels mindestens einer Schraube, an dem Stapelendelement festgelegt sein.

Für eine einfache Demontage des Brennstoffzellenstapels für Reparatur- und Wartungszwecke ist es günstig, wenn das Zugelement an mindestens einem Stapelendelement lösbar festgelegt ist.

Besonders einfach, insbesondere ohne die Verwendung zusätzlicher Befestigungsmittel und ohne zusätzliches Werkzeug, ist die Festlegung des Zugelements an dem Stapelendelement realisierbar, wenn das Zugelement an dem Stapelendelement eingehängt ist.

Eine solche Einhängung des Zugelements am Stapelendelement ist besonders einfach durchführbar, wenn das Stapelendelement mindestens eine Einhängenase zum Einhängen des Zugelements aufweist.

Ferner ist es günstig, wenn das Zugelement mindestens eine Einhängeöffnung zum Einhängen an dem Stapelendelement aufweist.

Zur Erzeugung der Zugspannung in dem Zugelement kann vorgesehen sein, dass mindestens ein Zugelement an mindestens einem seiner Endbereiche an einem anderen Endbereich desselben Zugelements oder an einem anderen Zugelement festgelegt ist.

Das Zugelement kann also insbesondere ringförmig geschlossen ausgebildet sein.

Der Endbereich mindestens eines Zugelements kann insbesondere formschlüssig mit einem anderen Endbereich desselben Zugelements oder mit einem anderen Zugelement verbunden sein.

Diese Verbindung kann beispielsweise als eine Crimpverbindung ausgebildet sein.

Eine besonders einfache formschlüssige Verbindung zwischen zwei Endbereichen desselben Zugelements oder zwischen Endbereichen verschiedener Zugelemente wird erzielt, wenn mindestens ein Abschnitt eines Endbereichs mindestens eines Zugelements durch eine Durchtrittsöffnung in einem anderen Endbereich desselben Zugelements oder in einem anderen Zugelement hindurchgedrückt und anschließend so verformt worden ist, dass der hindurchgedrückte Abschnitt nicht mehr durch die Durchtrittsöffnung zurückgelangen kann.

Alternativ oder ergänzend hierzu kann vorgesehen sein, dass ein Endbereich mindestens eines Zugelements mindestens eine Durchtrittsöffnung aufweist und dass ein Abschnitt eines anderen Endbereichs desselben Zugelements oder ein Abschnitt eines anderen Zugelements durch diese Durchtrittsöffnung hindurchgedrückt und anschließend so verformt worden ist, dass der hindurchgedrückte Abschnitt nicht mehr durch die Durchtrittsöffnung zurückgelangen kann.

Ferner kann zur Erzeugung der erforderlichen Zugspannung in dem Zugelement vorgesehen sein, dass mindestens ein Endbereich mindestens eines Zugelements mittels einer Befestigungsvorrichtung an einem anderen Endbereich desselben Zugelements oder an einem anderen Zugelement festgelegt ist.

Eine solche Befestigungsvorrichtung kann mindestens ein Befestigungsmittel umfassen.

Vorzugsweise umfasst die Befestigungsvorrichtung mindestens zwei in einer quer zur Stapelrichtung verlaufenden Richtung voneinander beabstandete Befestigungsmittel.

Dabei kann das mindestens eine Befestigungsmittel als eine Befestigungsschraube ausgebildet sein.

Ferner kann die Befestigungsvorrichtung mindestens eine Befestigungsleiste umfassen, in welche mindestens ein Befestigungsmittel eingreift.

Ferner kann die Befestigungsvorrichtung mindestens eine Aufnahmeleiste umfassen, durch welche sich mindestens ein Befestigungsmittel hindurch erstreckt.

Bei einer besonders bevorzugten Ausgestaltung der Erfindung umfasst die Befestigungsvorrichtung ferner mindestens ein Federelement, welches einen Endbereich mindestens eines Zugelements gegen einen anderen Endbereich desselben Zugelements oder gegen einen Endbereich eines anderen Zugelements vorspannt.

Bei einer Temperaturänderung können sich die Brennstoffzelleneinheiten einerseits und das Material des Zugelements andererseits aufgrund unterschiedlicher mittlerer Wärmeausdehnungskoeffizienten unterschiedlich stark längs der Stapelrichtung ausdehnen. Um solche Wärmeausdehnungsdifferenzen ausgleichen zu können, ist es von Vorteil, wenn die Spannvorrichtung mindestens ein federndes Längendehnungsausgleichselement umfasst.

Besonders günstig ist es, wenn das Längendehnungsausgleichselement in mindestens ein Zugelement integriert ist, da auf diese Weise die Anzahl der für den Aufbau des Brennstoffzellenstapels erforderlichen Bauelemente verringert wird.

Das Zugelement ist vorzugsweise einstückig mit dem Längendehnungsausgleichselement ausgebildet.

Insbesondere kann vorgesehen sein, dass mindestens ein Längendehnungsausgleichselement durch einen gewellten und/oder gefalteten Bereich mindestens eines Zugelements gebildet ist.

Alternativ oder ergänzend hierzu kann vorgesehen sein, dass mindestens ein Längendehnungsausgleichselement durch einen mit einer verformbaren Ausnehmung versehenen Bereich mindestens eines Zugelements gebildet ist.

Um den Kraftfluss zwischen den Brennstoffzelleneinheiten einerseits und dem Zugelement andererseits noch präziser steuern und vergleichmäßigen zu können, ist es von Vorteil, wenn der Brennstoffzellenstapel mindestens ein federndes Druckübertragungselement umfasst.

Ein solches Druckübertragungselement kann insbesondere zwischen einer Brennstoffzelleneinheit und einem Stapelendelement, das eine stirnseitige Begrenzung des Brennstoffzellenstapels bildet, angeordnet sein.

Um die Brennstoffzelleneinheiten bei einer deutlich über der Umgebungstemperatur liegenden Betriebstemperatur betreiben zu können, insbesondere bei Verwendung von Hochtemperatur-Brennstoffzelleneinheiten, beispielsweise vom SOFC(Solid Oxide Fuel Cell)-Typ, ist es von Vorteil, wenn der Brennstoffzellenstapel mindestens ein Wärmeisolationselement umfasst.

Ein solches Wärmeisolationselement kann insbesondere zwischen den Brennstoffzelleneinheiten und mindestens einem Zugelement angeordnet sein. In diesem Fall ist es nicht erforderlich, dass das Zugelement bei der Betriebstemperatur der Brennstoffzelleneinheiten mechanisch und chemisch beständig ist.

Für eine großflächige und gleichmäßige Krafteinleitung in die Brennstoffzelleneinheiten ist es besonders günstig, wenn die Spannvorrichtung mindestens ein streifen- oder bandförmiges Zugelement umfasst, das sich um beide Stirnseiten des Brennstoffzellenstapels herum erstreckt.

Vorzugsweise ist das Zugelement in diesem Fall ringförmig geschlossen ausgebildet.

Weitere Merkmale und Vorteile der Erfindung sind Gegenstand der nachfolgenden Beschreibung und der zeichnerischen Darstellung von Ausführungsbeispielen.

In den Zeichnungen zeigen:
- Fig. 1: eine schematische Vorderansicht eines Brennstoffzellenstapels mit zwei Endplatten und zwei um eine der Endplatten herum geführten Spannbändern, die an der zweiten Endplatte eingehängt sind;
- Fig. 2: eine schematische Seitenansicht des Brennstoffzellenstapels aus Fig. 1, mit der Blickrichtung in Richtung des Pfeiles 2 in Fig. 1;
- Fig. 3: einen schematischen vertikalen Schnitt durch einen Randbereich der unteren Endplatte des Brennstoffzellenstapels und ein daran eingehängtes Spannband;
- Fig. 4: eine vergrößerte Darstellung des Bereichs I aus Fig. 2;
- Fig. 5: eine schematische Vorderansicht einer zweiten Ausführungsform eines Brennstoffzellenstapels, der zwischen der obersten Brennstoffzelleneinheit und der oberen Endplatte angeordnete federnde Druckübertragungselemente umfasst;
- Fig. 6: eine schematische Vorderansicht einer dritten Ausführungsform eines Brennstoffzellenstapels, der die Brennstoffzelleneinheiten umgebende Wärmeisolationselemente umfasst;
- Fig. 7: eine schematische Vorderansicht einer vierten Ausführungsform eines Brennstoffzellenstapels, welcher zwei um beide Endplatten umlaufende Spannbänder umfasst, die an ihren Endbereichen an sich selbst festgelegt sind;
- Fig. 8: eine schematische Seitenansicht des Brennstoffzellenstapels aus Fig. 7, mit der Blickrichtung in Richtung des Pfeiles 8 in Fig. 7;
- Fig. 9: eine schematische Draufsicht auf die Endbereiche eines der Spannbänder aus den Fig. 7 und 8;
- Fig. 10: einen schematischen vertikalen Schnitt durch die Endbereiche des Spannbandes aus Fig. 9, längs der Linie 10-10 in Fig. 9;
- Fig. 11: einen schematischen horizontalen Schnitt durch die Endbereiche des Spannbands aus Fig. 9, längs der Linie 11-11 in Fig. 9;
- Fig. 12: eine schematische Vorderansicht einer fünften Ausführungsform eines Brennstoffzellenstapels, welcher zwei Spannstreifen umfasst, die sich um jeweils eine Endplatte des Brennstoffzellenstapels herum erstrecken und mittels einer Befestigungsvorrichtung aneinander festgelegt sind;
- Fig. 13: eine schematische Seitenansicht des Brennstoffzellenstapels aus Fig. 12, mit der Blickrichtung in Richtung des Pfeiles 13 in Fig. 12;
- Fig. 14: eine schematische Vorderansicht einer sechsten Ausführungsform eines Brennstoffzellenstapels, der zwei sich um eine Endplatte des Brennstoffzellenstapels herum erstreckende und an der zweiten Endplatte des Brennstoffzellenstapels festgelegte Spannbänder umfasst;
- Fig. 15: eine schematische Seitenansicht des BrennstofFzellenstapels aus Fig. 14, mit der Blickrichtung in Richtung des Pfeiles 15 in Fig. 14;
- Fig. 16: eine vergrößerte Darstellung des Bereichs II aus Fig. 14;
- Fig. 17: eine schematische Vorderansicht einer siebten Ausführungsform eines Brennstoffzellenstapels, der zwei Spannbänder umfasst, die sich um beide Endplatten des Brennstoffzellenstapels herum erstrecken, an ihren Endbereichen an sich selbst festgelegt sind und jeweils ein federndes Längendehnungsausgleichselement in Form eines mit einer verformbaren Ausnehmung versehenen Bereichs aufweisen;
- Fig. 18: eine schematische Seitenansicht des Brennstoffzellenstapels aus Fig. 17, mit der Blickrichtung in Richtung des Pfeils 18 in Fig. 17;
- Fig. 19: eine schematische Draufsicht auf den Längendehnungsausgleichsbereich eines der Spannbänder in einem nicht gedehnten Zustand; und
- Fig. 20: eine schematische Draufsicht auf den Längendehnungsausgleichsbereich eines der Spannbänder in einem gedehnten Zustand.

Gleiche oder funktional äquivalente Elemente sind in allen Figuren mit denselben Bezugszeichen bezeichnet.

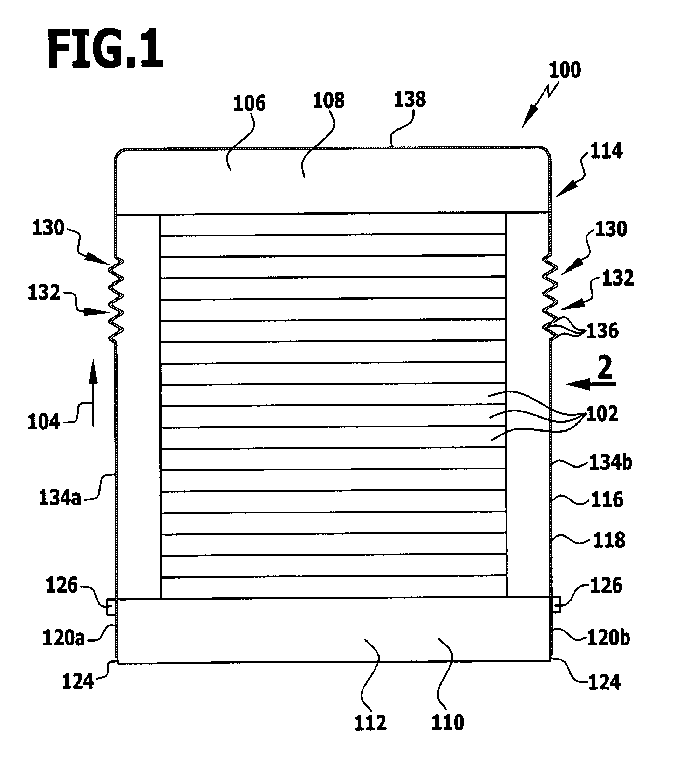

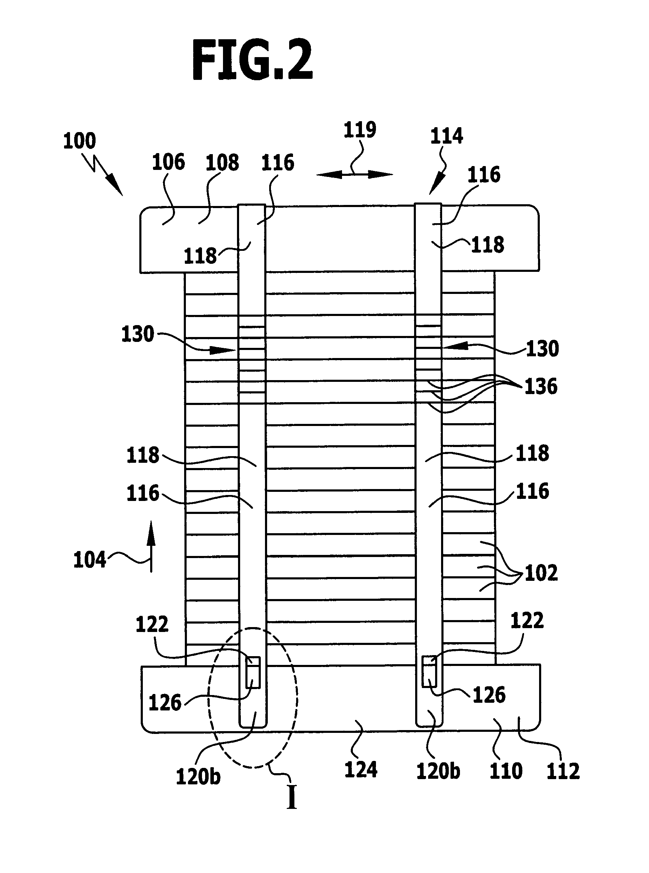

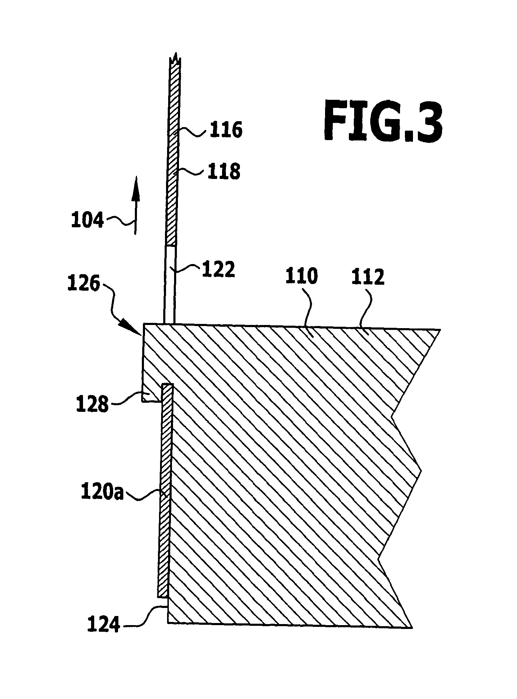

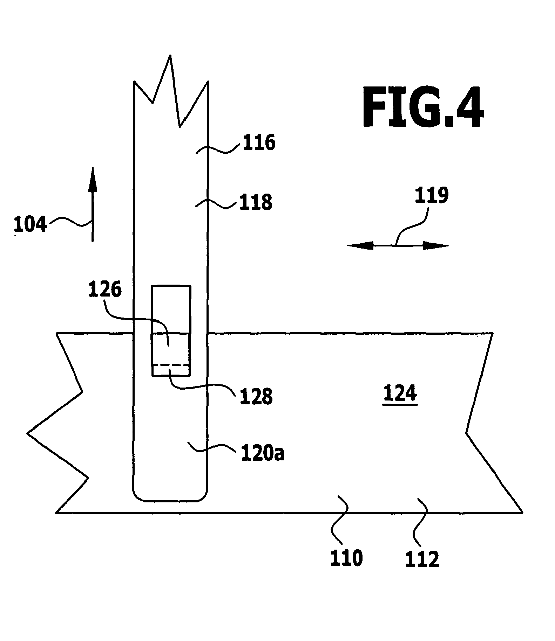

Ein in den Fig. 1 bis 4 dargestellter, als Ganzes mit 100 bezeichneter Brennstoffzellenstapel umfasst eine Vielzahl von planaren Brennstoffzelleneinheiten 102, die längs einer Stapelrichtung 104 aufeinandergestapelt sind.

Jede der Brennstoffzelleneinheiten 102 umfasst ein (nicht im Detail dargestelltes) Gehäuse, das beispielsweise aus einem als Gehäuseoberteil ausgebildeten ersten Blechformteil und einem als Gehäuseunterteil ausgebildeten zweiten Blechformteil zusammengesetzt sein kann, wie dies beispielsweise in der DE 100 44 703 A1 dargestellt und beschrieben ist.

Jede der Brennstoffzelleneinheiten 102 ist mit Durchtrittsöffnungen für Brenngas und mit Durchtrittsöffnungen für ein Oxidationsmittel versehen, wobei die Durchtrittsöffnungen längs der Stapelrichtung 104 aufeinanderfolgender Brennstoffzelleneinheiten 102 so miteinander fluchten, dass den Brennstoffzellenstapel 100 durchsetzende Zuführkanäle für Brenngas und für Oxidationsmittel sowie Abführkanäle für überschüssiges Brenngas und überschüssiges Oxidationsmittel ausgebildet sind.

An dem Gehäuse jeder Brennstoffzelleneinheit 102 ist ein Substrat mit einer daran angeordneten Kathoden-Elektrolyt-Anoden-Einheit (KEA-Einheit) gehalten, wobei in der KEA-Einheit die elektrochemische Brennstoffzellenreaktion abläuft.

Die KEA-Einheiten einander benachbarter Brennstoffzelleneinheiten 102 sind über elektrisch leitende Kontaktelemente miteinander verbunden.

Die Gehäuse aufeinanderfolgender Brennstoffzelleneinheiten 102 sind mittels elektrisch isolierender, gasdichter Dichtungselemente miteinander verbunden.

Die obere Stirnseite des Brennstoffzellenstapels 100 wird durch ein erstes Stapelendelement 106 in Form einer oberen Endplatte 108 begrenzt.

Die untere Stirnfläche des Brennstoffzellenstapels 100 wird durch ein zweites Stapelendelement 110 in Form einer unteren Endplatte 112 begrenzt.

Die Endplatten 108, 112 weisen einen größeren horizontalen Querschnitt auf als die Brennstoffzelleneinheiten 102 und stehen seitlich über die aufeinandergestapelten Brennstoffzelleneinheiten 102 über.

Die Endplatten 108, 112 sind vorzugsweise aus einem bei der Betriebstemperatur der Brennstoffzelleneinheiten 102 chemisch und mechanisch beständigen metallischen Material gebildet und können mit den die Brennstoffzelleneinheiten 102 durchsetzenden Zuführkanälen und Abführkanälen für Brenngas und Oxidationsmittel in Verbindung stehende Gasdurchtrittskanäle aufweisen.

Um im Betrieb des Brennstoffzellenstapels 100 die erforderlichen Dichtkräfte auf die Dichtungselemente der Brennstoffzelleneinheiten 102 und die erforderlichen Kontaktkräfte auf die Kontaktelemente der Brennstoffzelleneinheiten 102 aufzubringen, umfasst der Brennstoffzellenstapel 100 ferner eine Spannvorrichtung 114, mittels welcher die Stapelendelemente 106, 110 und damit die dazwischen angeordneten Brennstoffzelleneinheiten 102 gegeneinander verspannt werden.

Bei der in den Fig. 1 bis 4 dargestellten Ausführungsform eines Brennstoffzellenstapels 100 umfasst diese Spannvorrichtung 114 mehrere, beispielsweise zwei, bandförmige Zugelemente 116 in Form von Spannbändern 118, welche sich um eines der Stapelendelemente 106, 110, beispielsweise um die obere Endplatte 108, herum erstrecken und mit ihren beiden Endbereichen 120a, 120b jeweils an dem anderen Stapelendelement, also beispielsweise an der unteren Endplatte 112, eingehängt sind.

Um dieses Einhängen zu ermöglichen, sind die Spannbänder 118 in ihren Endbereichen 120a, 120b mit jeweils einer, beispielsweise rechteckigen, Einhängeöffnung 122 versehen, während die untere Endplatte 112 an ihren Seitenwänden 124 mit mehreren Einhängenasen 126, welche einen nach unten vorstehenden Vorsprung 128 aufweisen, versehen ist.

Bei der Montage der Spannbänder 118 an dem Brennstoffzellenstapel 100 werden die Endbereiche 120a, 120b der Spannbänder soweit nach unten gezogen, dass die Vorsprünge 128 der Einhängenasen 126 der unteren Endplatte 112 durch die Einhängeöffnungen 122 der Spannbänder 118 hindurchbewegt werden können und die unteren Ränder der Einhängeöffnungen 122, nachdem sie durch die Eigenelastizität des jeweiligen Spannbandes 118 wieder nach oben gezogen worden sind, hinter den jeweils eine Hinterschneidung bildenden Vorsprüngen 128 zu liegen kommen und somit durch die Vorsprünge 128 gegen ein Ablösen von der unteren Endplatte 112 gesichert sind.

Die Verbindung zwischen einem Spannband 118 und der unteren Endplatte 112 kann in einfacher Weise dadurch gelöst werden, dass der Endbereich 120a, 120b des Spannbandes 118 nach unten gezogen wird, bis die jeweilige Einhängeöffnung 122 so mit der Einhängenase 126 fluchtet, dass der Rand der Einhängeöffnung 122 an der Einhängenase 126 vorbei von der Seitenwand 124 der unteren Endplatte 112 wegbewegt werden kann, um das Spannband 118 außer Eingriff mit der Einhängenase 126 zu bringen.

Die beiden Spannbänder 118 sind in einer senkrecht zur Stapelrichtung 104 verlaufenden horizontalen Querrichtung 119 voneinander beabstandet.

Die Spannbänder 118 sind vorzugsweise aus einem metallischen Material, insbesondere aus einem Stahlblechmaterial, gebildet.

Alternativ hierzu können auch andere Materialien mit einer ausreichend hohen Zugfestigkeit und thermischen Beständigkeit verwendet werden, beispielsweise geeignete Kunststoffmaterialien.

Wenn der Brennstoffzellenstapel 100 seine Temperatur ändert, insbesondere auf Betriebstemperatur gebracht wird, können sich die Brennstoffzelleneinheiten 102 mit den Stapelendelementen 106 und 110 einerseits und die Zugelemente 116 andererseits aufgrund unterschiedlicher mittlerer Wärmeausdehnungskoeffizienten unterschiedlich stark längs der Stapelrichtung 104 ausdehnen. Um solche unterschiedlichen Längenausdehnungen kompensieren und dennoch eine ausreichend hohe Kontaktkraft bzw. Dichtkraft zwischen den Brennstoffzelleneinheiten 102 mittels der Spannvorrichtung 114 erzeugen zu können, weist jedes der Zugelemente 116 jeweils zwei federnde Längendehnungsausgleichselemente 130 auf, die in Form von ziehharmonikaartig gefalteten oder gewellten Bereichen 132 in die beiden parallel zur Stapelrichtung 104 verlaufenden Abschnitte 134a, 134b des jeweiligen Spannbandes 118 integriert sind.

Wenn sich die Brennstoffzelleneinheiten 102 längs der Stapelrichtung 104 stärker ausdehnen als das Material der Spannbänder 118, so vergrößert sich die Ausdehnung der gefalteten oder gewellten Bereiche 132 längs der Stapelrichtung 104 um einen der Längenausdehnungsdifferenz entsprechenden Betrag, indem die Scheitellinien 136 des gefalteten oder gewellten Bereichs 132 weiter auseinanderrücken.

Umgekehrt wird eine Verkürzung des gefalteten oder gewellten Bereichs 132 längs der Stapelrichtung 104 erzielt, indem die Scheitellinien 136 des gefalteten oder gewellten Bereichs 132 näher zusammenrücken.

Somit kann durch eine reversible Längenänderung der Längenausgleichselemente 130 ein Unterschied in der Wärmedehnung der Brennstoffzelleneinheiten 102 einerseits und des Materials der Zugelemente 116 andererseits ausgeglichen, eine Überdehnung der Zugelemente 116 vermieden und eine auf die Brennstoffzelleneinheiten 102 einwirkende gewünschte Spannkraft aufrechterhalten werden.

Der zwischen den parallel zur Stapelrichtung 104 verlaufenden Abschnitten 134a, 134b, welche flächig an den Seitenwänden 124 der oberen Endplatte 108 anliegen, angeordnete Abschnitt 138 jedes Spannbandes 118 liegt flächig an der Oberseite der oberen Endplatte 108 an, so dass die Zugkraft der Zugelemente 116 über eine große Fläche hinweg und gleichmäßig verteilt auf die obere Endplatte 108 einwirken kann, wodurch ein gleichmäßiger Kraftfluss durch die obere Endplatte 108 hindurch auf die Brennstoffzelleneinheiten 102 gewährleistet ist.

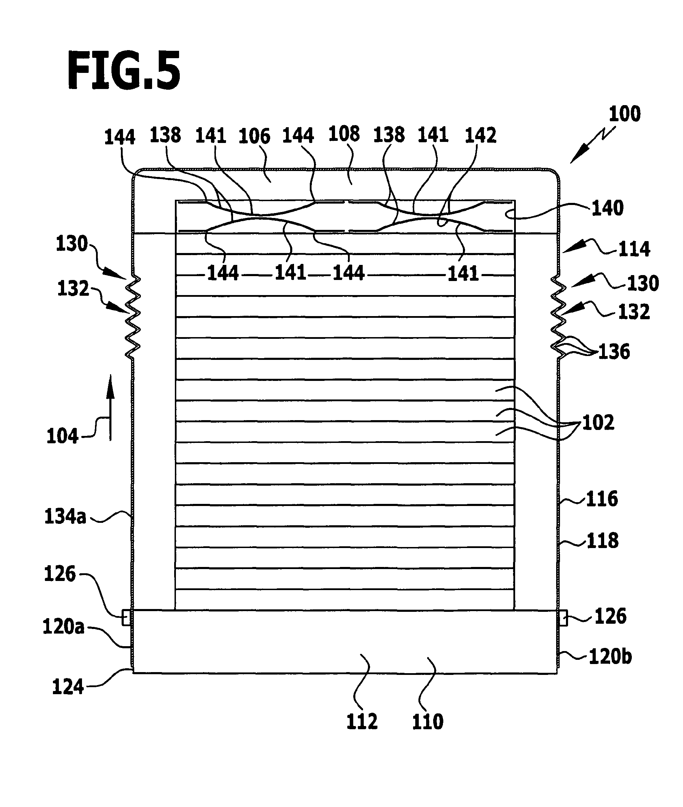

Eine in Fig. 5 dargestellte zweite Ausführungsform eines Brennstoffzellenstapels 100 unterscheidet sich von der vorstehend beschriebenen ersten Ausführungsform dadurch, dass das erste Stapelendelement 106, das heißt die obere Endplatte 108, nicht direkt an der obersten Brennstoffzelleneinheit 102 anliegt, sondern indirekt über mehrere federnde Druckübertragungselemente 138, welche zwischen dem ersten Stapelendelement 106 und der obersten Brennstoffzelleneinheit 102 angeordnet sind.

Zur Aufnahme dieser Druckübertragungselemente 138 ist die obere Endplatte 108 des Brennstoffzellenstapels 100 an ihrer Unterseite mit einer im wesentlichen quaderförmigen Ausnehmung 140 versehen.

Die federnden Druckübertragungselemente 138 können insbesondere als Blechplatten ausgebildet sein, die jeweils mit einer Vollsicke 141 versehen sind und paarweise so aufeinander angeordnet sind, dass die Sickenkuppen 142 der Vollsicken 141 einander zugewandt sind und die Sickenfüße 144 sich an der oberen Endplatte 108 bzw. an der obersten Brennstoffzelleneinheit 102 abstützen.

Durch Verwendung solcher zusätzlichen federnden Druckübertragungselemente 138 kann der Kraftfluss zwischen den Brennstoffzelleneinheiten 102 einerseits und den Zugelementen 116 und dem Stapelendelement 106 andererseits noch präziser gesteuert und vergleichmäßigt werden.

Im übrigen stimmt die in Fig. 5 dargestellte zweite Ausführungsform eines Brennstoffzellenstapels 100 hinsichtlich Aufbau und Funktion mit der in den Fig. 1 bis 4 dargestellten ersten Ausführungsform überein, auf deren vorstehende Beschreibung insoweit Bezug genommen wird.

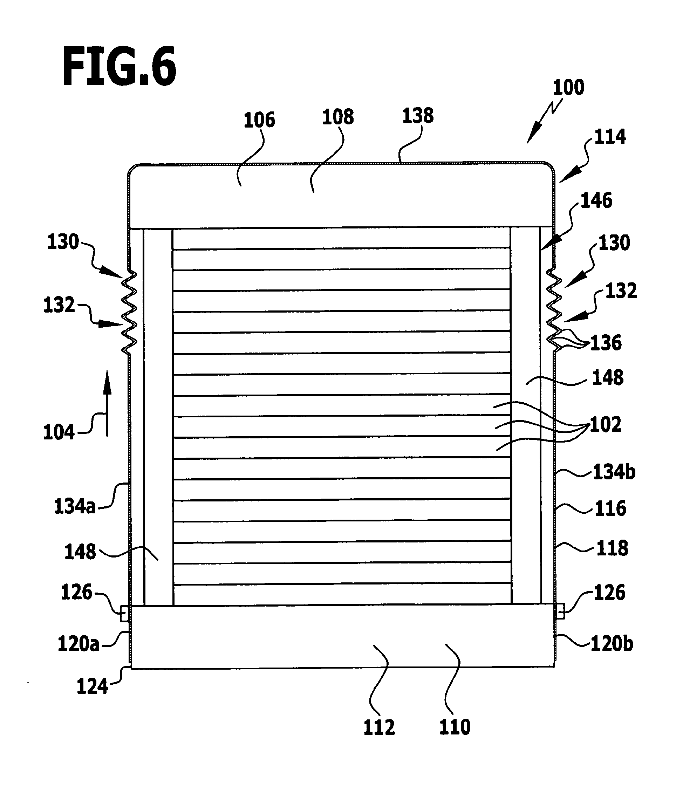

Eine in Fig. 6 dargestellte dritte Ausführungsform eines Brennstoffzellenstapels 100 unterscheidet sich von der in den Fig. 1 bis 4 dargestellten ersten Ausführungsform dadurch, dass zwischen den Brennstoffzelleneinheiten 102 und der Spannvorrichtung 114 eine Wärmeisolation 146 angeordnet ist, welche aus wärmeisolierendem Material gebildete oder wärmeisolierende Einsätze umfassende Endplatten 108, 112 sowie die Brennstoffzelleneinheiten 102 seitlich abdeckende Wärmeisolationselemente 148 umfasst.

Die Wärmeisolation 146 ist dazu in der Lage, Kräfte von den Zugelementen 116 auf die Brennstoffzelleneinheiten 102 zu übertragen.

Ferner ermöglicht es die Wärmeisolation 146, die Brennstoffzelleneinheiten 102 bei einer deutlich über der Umgebungstemperatur liegenden Betriebstemperatur zu betreiben.

Die in Fig. 6 dargestellte dritte Ausführungsform eines Brennstoffzellenstapels 100 eignet sich daher insbesondere zur Verwendung mit Hochtemperatur-Brennstoffzelleneinheiten, die eine Betriebstemperatur im Bereich von ungefähr 800°C bis ungefähr 950°C aufweisen.

Solche Hochtemperatur-Brennstoffzelleneinheiten können insbesondere vom SOFC(Solid Oxide Fuel Cell)-Typ sein.

Im übrigen stimmt die in Fig. 6 dargestellte dritte Ausführungsform eines Brennstoffzellenstapels 100 hinsichtlich Aufbau und Funktion mit der in den Fig. 1 bis 4 dargestellten ersten Ausführungsform überein, auf deren vorstehende Beschreibung insoweit Bezug genommen wird.

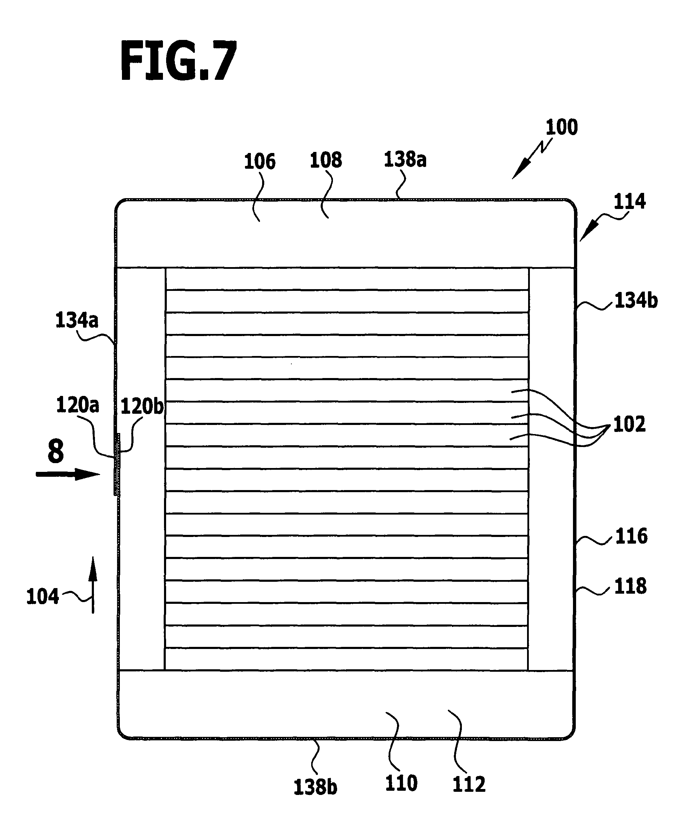

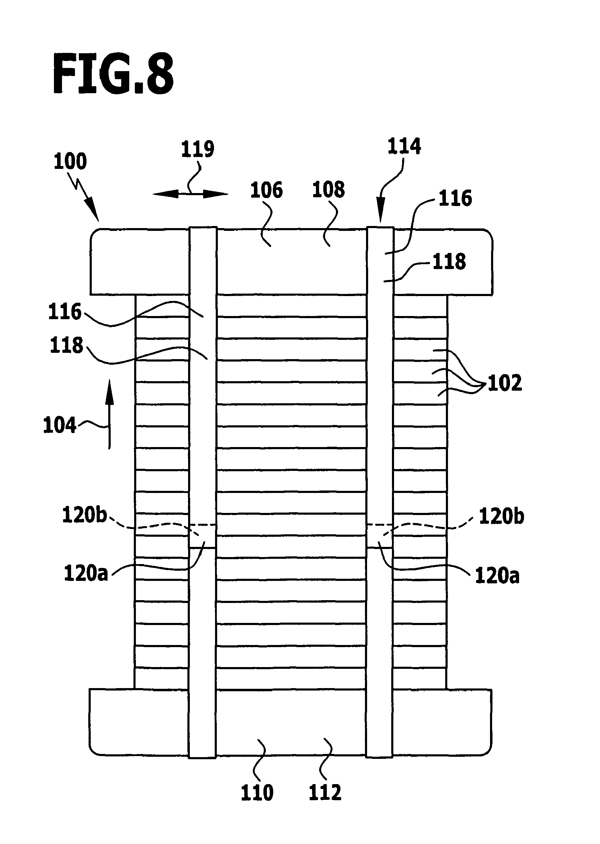

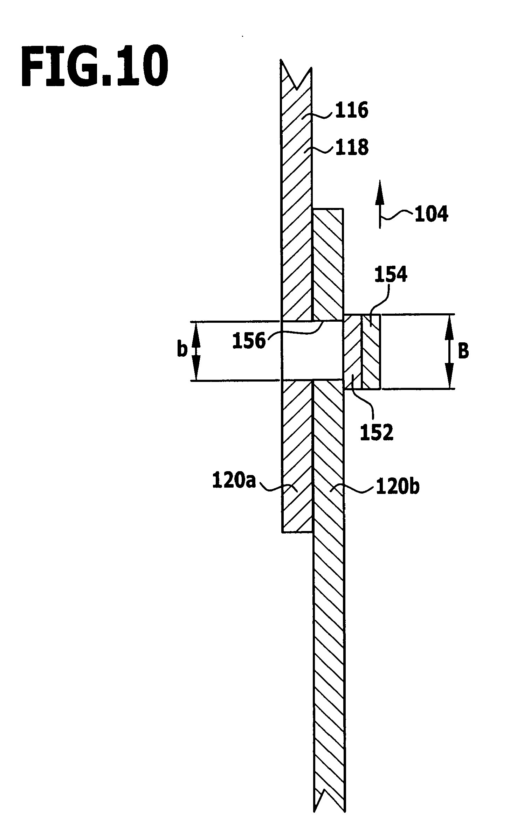

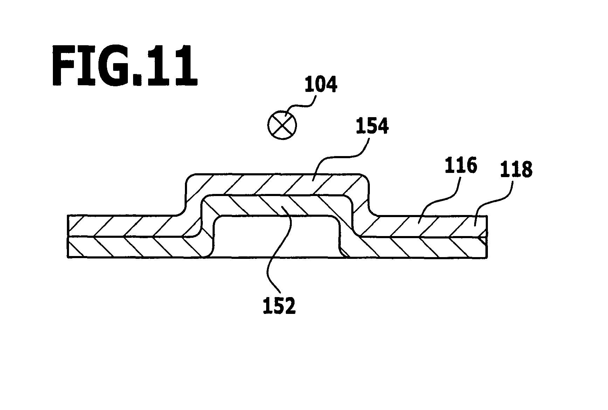

Eine in den Fig. 7 bis 11 dargestellte vierte Ausführungsform eines Brennstoffzellenstapels 100 unterscheidet sich von der in den Fig. 1 bis 4 dargestellten ersten Ausführungsform dadurch, dass die beiden bandförmigen Zugelemente 116 nicht an der unteren Endplatte 112 festgelegt sind, sondern sich jeweils um beide Stapelendelemente 106, 110 herum erstrecken, wobei der eine Endbereich 120a jedes Spannbandes 118 mit dem anderen Endbereich 120b desselben Spannbandes 118 so verbunden ist, dass jedes der Spannbänder 118 ein ringförmig geschlossenes Zugelement 116 bildet.

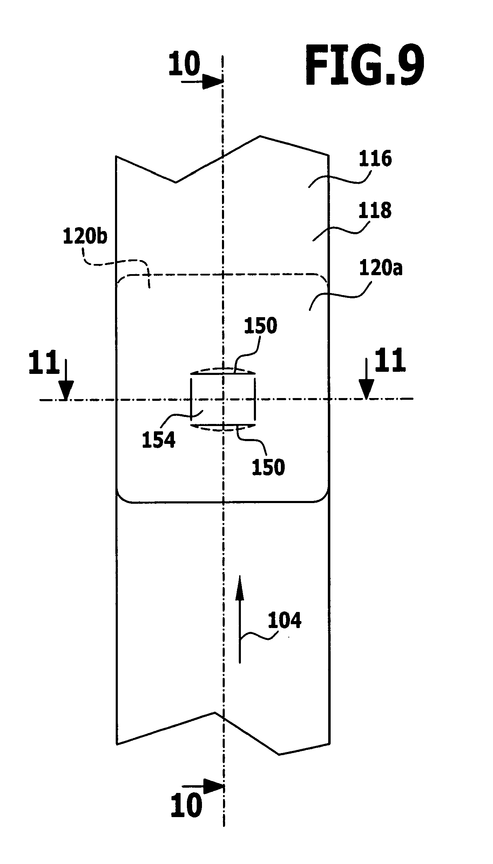

Die Verbindung der beiden Endbereiche 120a, 120b miteinander kann, wie in den Fig. 9 bis 11 dargestellt, insbesondere dadurch erfolgen, dass ein durch zwei (beispielsweise senkrecht zur Stapelrichtung 104 verlaufende) Schlitze 150 von dem übrigen ersten Endbereich 120a getrennter erster Abschnitt 152 und ein mit dem ersten Abschnitt 152 im wesentlichen kongruenter, ebenfalls durch quer zur Stapelrichtung 104 verlaufende Schlitze von dem übrigen zweiten Endbereich 120b abgetrennter zweiter Abschnitt 154 des Spannbandes 118 so aus der Ebene des ersten Endbereichs 120a bzw. des zweiten Endbereichs 120b heraus verformt werden, dass der erste Abschnitt 152 durch die Durchtrittsöffnung 156, welche durch das Herausverformen des zweiten Abschnitts 154 aus der Ebene des zweiten Endbereichs 120b entsteht, hindurchtritt.

Anschließend werden der erste Abschnitt 152 und der zweite Abschnitt 154 durch einen Prägevorgang so verformt, dass ihre Breite B, das heißt deren Ausdehnung in der Stapelrichtung 104, die Breite b der Durchtrittsöffnung 156 in dem zweiten Endbereich 120b, das heißt deren Ausdehnung in der Stapelrichtung 104, übertrifft, so dass der durch die Durchtrittsöffnung 156 hindurchgedrückte erste Abschnitt 152 nicht mehr durch die Durchtrittsöffnung 156 zurück in die Ebene des ersten Endbereichs 120a zurückbewegt werden kann.

Durch die Festlegung der beiden Endbereiche 120a und 120b jedes Spannbandes 118 aneinander wird in den Spannbändern 118 die gewünschte Zugkraft erzeugt, welche über die Endplatten 108, 112 auf die Brennstoffzelleneinheiten 102 übertragen wird, um dieselben mit den gewünschten Dichtkräften und Kontaktkräften zu beaufschlagen.

Die zwischen den parallel zur Stapelrichtung 104 verlaufenden Abschnitten 134a, 134b angeordneten Abschnitte 138a und 138b jedes Spannbandes 118 liegen flächig an der den Brennstoffzelleneinheiten 102 abgewandten Außenseite der oberen Endplatte 108 bzw. der unteren Endplatte 112 an, so dass eine großflächige und gleichmäßige Krafteinleitung von den Spannbändern 118 auf die Endplatten 108, 112 gewährleistet ist.

Die bei der ersten Ausführungsform vorgesehenen Längenausgleichselemente 130 können bei der in den Fig. 7 bis 11 dargestellten vierten Ausführungsform eines Brennstoffzellenstapels 100 entfallen, bei einer Variante dieser Ausführungsform aber vorhanden sein.

Im übrigen stimmt die in den Fig. 7 bis 11 dargestellte vierte Ausführungsform eines Brennstoffzellenstapels 100 hinsichtlich Aufbau und Funktion mit der in den Fig. 1 bis 4 dargestellten ersten Ausführungsform überein, auf deren vorstehende Beschreibung insoweit Bezug genommen wird.

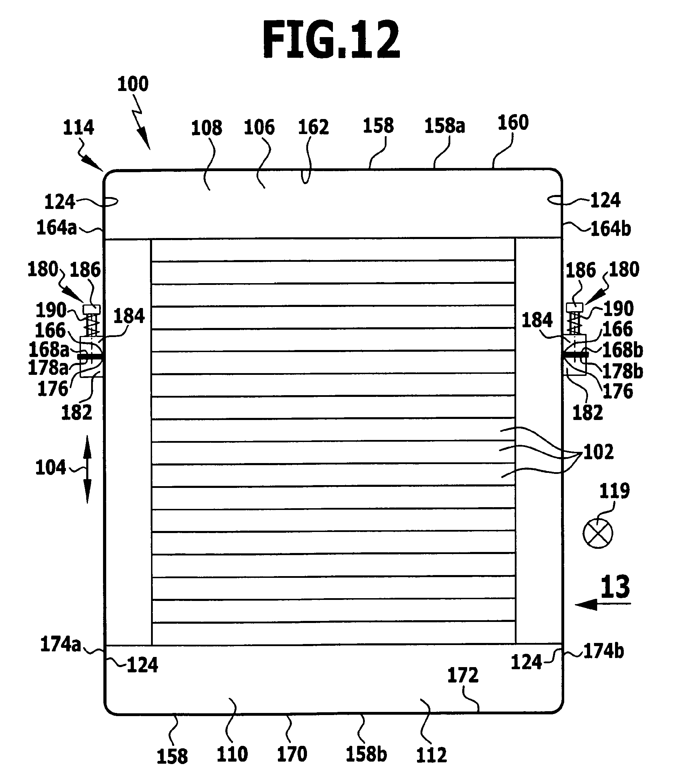

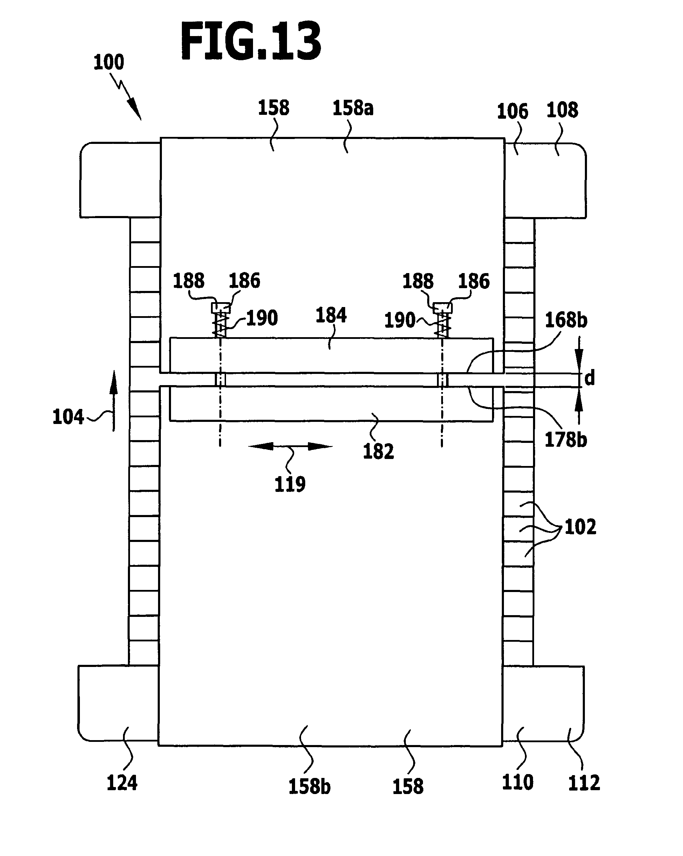

Eine in den Fig. 12 und 13 dargestellte fünfte Ausführungsform eines Brennstoffzellenstapels 100 unterscheidet sich von der in den Fig. 1 bis 4 dargestellten ersten Ausführungsform dadurch, dass die Spannvorrichtung 114 statt der bei der ersten Ausführungsform vorgesehenen Spannbänder 118 zwei streifenförmige Zugelemente 116 in Form von Spannstreifen 158 umfasst, welche vorzugsweise beide als Blechstreifen ausgebildet sind.

Wie aus den Fig. 12 und 13 zu ersehen ist, erstreckt sich ein oberer Spannstreifen 158a um die obere Endplatte 108 herum und liegt mit einem mittleren Abschnitt 160 flächig an der den Brennstoffzelleneinheiten 102 abgewandten Außenseite 162 und mit zwei seitlichen Abschnitten 164a, 164b flächig an den Seitenwänden 124 der oberen Endplatte 108 an.

Die seitlichen Abschnitte 164a, 164b des Spannstreifens 158 gehen an ihrem unteren Rand längs jeweils einer Biegelinie 166 in jeweils einen quer zur Stapelrichtung 104 ausgerichteten Endbereich 168a, 168b des oberen Spannstreifens 158a über.

Ein unterer Spannstreifen 158b erstreckt sich um die untere Endplatte 112 herum und liegt mit einem mittleren Abschnitt 170 flächig an der den Brennstoffzelleneinheiten 102 abgewandten Außenseite 172 und mit zwei seitlichen Abschnitten 174a, 174b flächig an den Seitenwänden 124 der unteren Endplatte 112 an.

Die seitlichen Abschnitte 174a, 174b gehen an ihren oberen Rändern längs jeweils einer Biegelinie 176 in jeweils einen quer zur Stapelrichtung 104 ausgerichteten Endbereich 178a bzw. 178b des unteren Spannstreifens 158b über.

Die Endbereiche 168a, 168b des oberen Spannstreifens 158a und die Endbereiche 178a, 178b des unteren Spannstreifens 158b sind mittels jeweils einer Befestigungsvorrichtung 180 aneinander festgelegt, welche eine in der Querrichtung 119 verlaufende Befestigungsleiste 182 und eine parallel zur Befestigungsleiste 182 verlaufende Aufnahmeleiste 184 sowie mehrere, beispielsweise zwei, in der Querrichtung 119 voneinander beabstandete Befestigungsschrauben 186 umfasst.

Die Befestigungsleiste 182 liegt mit ihrer Oberseite von unten an dem jeweils zugeordneten Endbereich 178a, 178b des unteren Spannstreifens 158b an, und die Aufnahmeleiste 184 liegt mit ihrer Unterseite von oben an dem jeweils zugeordneten Endbereich 168a, 168b des oberen Spannstreifens 158a an.

Die Befestigungsschrauben 186 erstrecken sich durch Durchtrittsöffnungen in der Aufnahmeleiste 184 und den Endbereichen 168a, 178a bzw. 168b, 178b hindurch und sind in Gewindesacklöcher, die in der Befestigungsleiste 182 vorgesehen sind, eingedreht.

Zwischen dem Kopf 188 jeder Befestigungsschraube 186 und der jeweils zugeordneten Aufnahmeleiste 184 ist jeweils ein Federelement 190 in Form einer Druckfeder angeordnet, welches sich an dem Kopf 188 und an der Aufnahmeleiste 184 abstützt und die Aufnahmeleiste 184 gegen den jeweils zugeordneten Endbereich 168a bzw. 168b nach unten vorspannt.

In dem in Fig. 12 dargestellten Zustand des Brennstoffzellenstapels 100 liegen die einander gegenüberstehenden Endbereiche 168a und 178a bzw. 168b und 178b der beiden Spannstreifen 158 aufgrund dieser Vorspannung durch die Federelemente 190 aneinander an.

Wenn sich bei einer Temperaturänderung die Brennstoffzelleneinheiten 102 mit den Stapelendelementen 106 und 110 längs der Stapelrichtung 104 stärker ausdehnen als die Spannstreifen 158, so werden die Aufnahmeleisten 184 der Befestigungsvorrichtungen 180 gegen die Rückstellkraft der Federelemente 190 längs der Stapelrichtung 104 von den Befestigungsleisten 182 wegbewegt, so dass die Endbereiche 168a und 178a bzw. 168b und 178b anschließend um die Strecke d voneinander beabstandet sind, wie in Fig. 13 dargestellt.

Die Federelemente 190 der Befestigungsvorrichtungen 180 wirken somit als Längendehnungsausgleichselemente, die eine Differenz d zwischen den Wärmedehnungen der Brennstoffzelleneinheiten 102 und der Stapelendelemente 106, 110 einerseits und der Spannstreifen 158 andererseits kompensieren.

Im übrigen stimmt die in den Fig. 12 und 13 dargestellte fünfte Ausführungsform eines Brennstoffzellenstapels 100 hinsichtlich Aufbau und Funktion mit der in den Fig. 1 bis 4 dargestellten ersten Ausführungsform überein, auf deren vorstehende Beschreibung insoweit Bezug genommen wird.

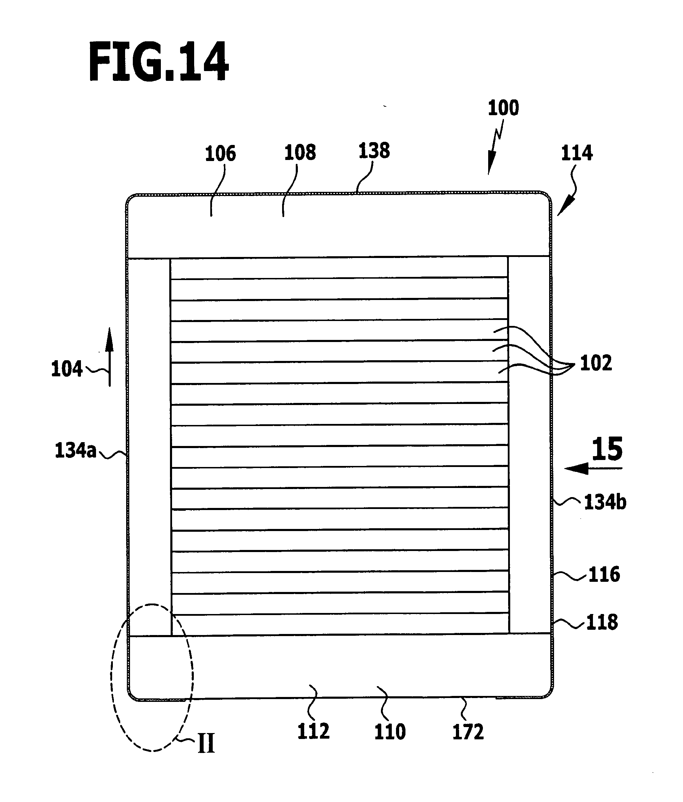

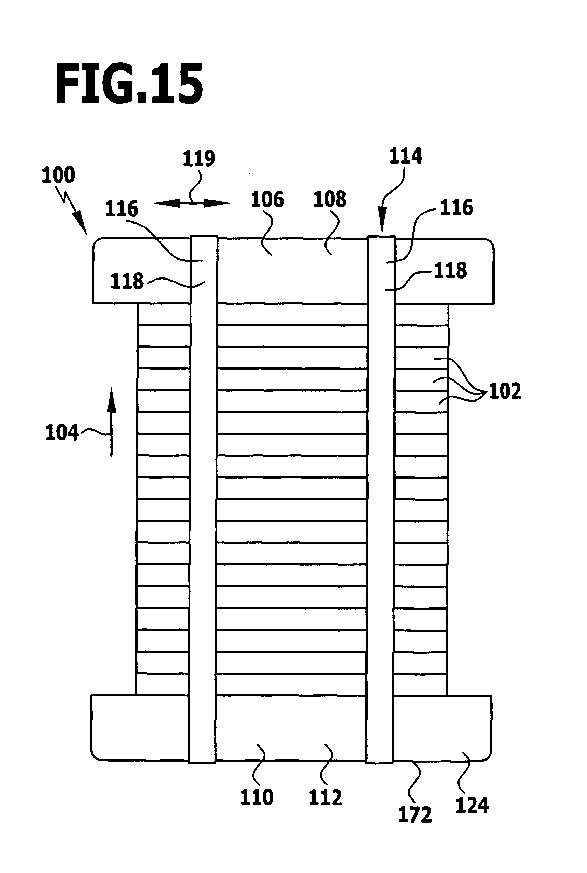

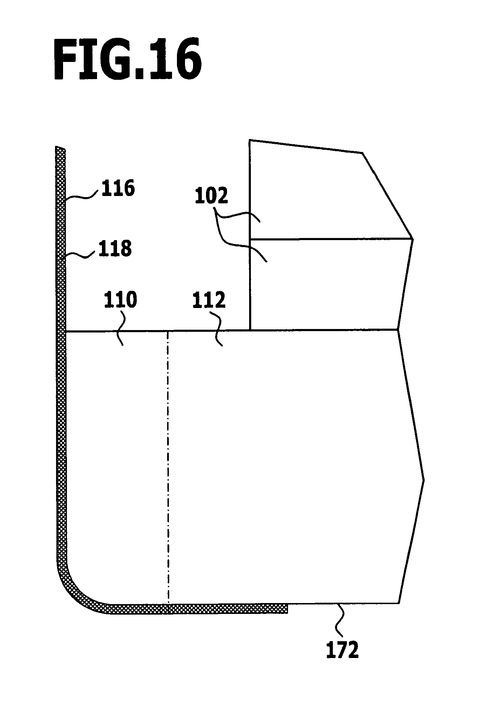

Eine in den Fig. 14 bis 16 dargestellte sechste Ausführungsform eines Brennstoffzellenstapels 100 unterscheidet sich von der in den Fig. 1 bis 4 dargestellten ersten Ausführungsform dadurch, dass die Spannbänder 118 nicht an den Seitenwänden 124 der unteren Endplatte 112 eingehängt sind, sondern sich bis zu der den Brennstoffzelleneinheiten 102 abgewandten Außenseite 172 der unteren Endplatte 112 erstrecken und dort, beispielsweise durch Verklebung und/oder Verschraubung, an der unteren Endplatte 112 festgelegt sind.

Die bei der ersten Ausführungsform vorgesehenen Längendehnungsausgleichselemente 130 an den Spannbändern 118 können bei dieser Ausführungsform entfallen, bei einer Variante dieser Ausführungsform aber vorhanden sein.

Im übrigen stimmt die in den Fig. 14 bis 16 dargestellte Ausführungsform eines Brennstoffzellenstapels 100 hinsichtlich Aufbau und Funktion mit der in den Fig. 1 bis 4 dargestellten ersten Ausführungsform überein, auf deren vorstehende Beschreibung insoweit Bezug genommen wird.

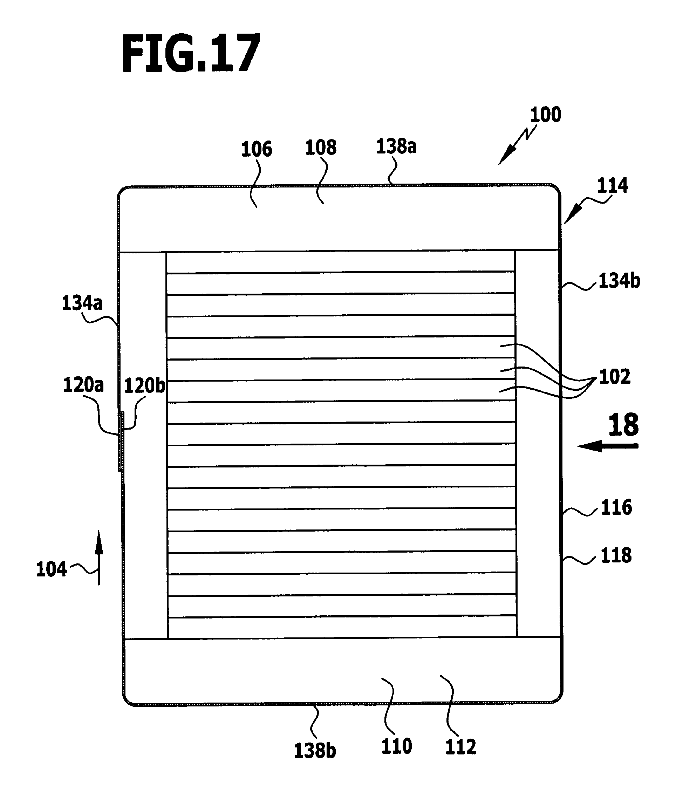

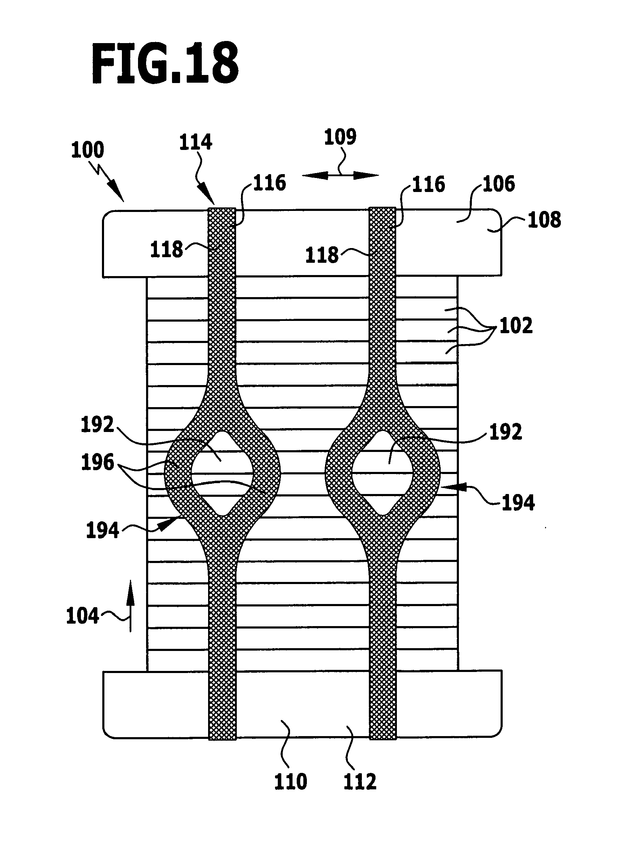

Eine in den Fig. 17 bis 20 dargestellte siebte Ausführungsform eines Brennstoffzellenstapels 100 unterscheidet sich von der in den Fig. 7 bis 11 dargestellten vierten Ausführungsform dadurch, dass die parallel zur Stapelrichtung 104 verlaufenden Abschnitte 134b der Spannbänder 118 mit federnden Längendehnungsausgleichselementen 130 in Form von mit jeweils einer verformbaren Ausnehmung 192 versehenen Bereichen 194, welche in das jeweilige Spannband 118 integriert sind, versehen sind.

Die verformbaren Ausnehmungen 192 können dabei beispielsweise im wesentlichen rautenförmige Gestalt aufweisen.

Die Bereiche 194 der Spannbänder 118 weisen eine größere Breite auf als die außerhalb dieser Bereiche liegenden Abschnitte der Spannbänder 118.

Die Bereiche 194 weisen jeweils zwei Stege 196 auf, welche die jeweilige Ausnehmung beranden und beispielsweise jeweils ungefähr dieselbe Breite aufweisen können wie die außerhalb der Bereiche 194 liegenden Abschnitte der Spannbänder 118.

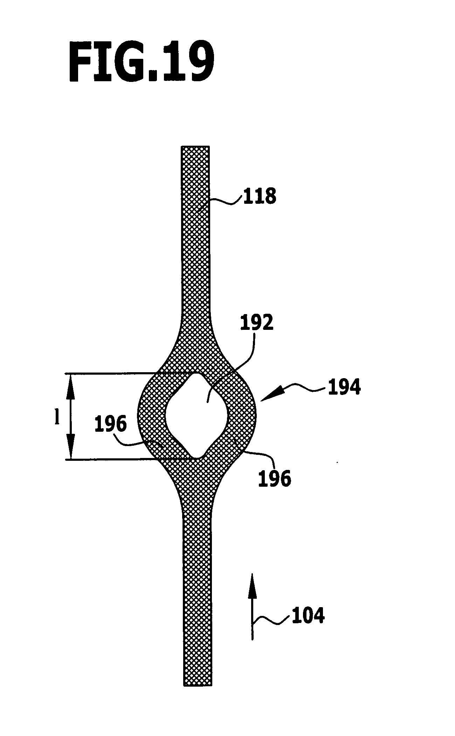

In dem in Fig. 19 dargestellten Ausgangszustand weist die verformbare Ausnehmung 192 eine Ausdehnung I längs der Stapelrichtung 104 auf.

Wenn sich bei einer Temperaturänderung die Brennstoffzelleneinheiten 102 mit den Stapelendelementen 106 und 110 längs der Stapelrichtung 104 stärker dehnen als das Material der Spannbänder 118, so wird die verformbare Ausnehmung 192 auf eine größere Ausdehnung L längs der Stapelrichtung 104 gedehnt, und die Ausdehnung des Bereichs 194 längs der Stapelrichtung 104 erhöht sich entsprechend.

Auf diese Weise ist es somit möglich, die unterschiedlichen Wärmedehnungen der Brennstoffzelleneinheiten 102 und der Stapelendelemente 106, 110 einerseits und des Materials der Spannbänder 118 andererseits zu kompensieren.

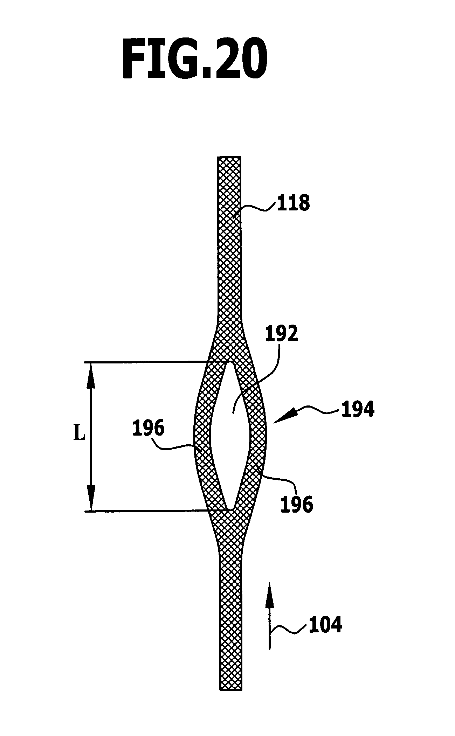

Bei einer Rückkehr zur Ausgangstemperatur verformt sich der Bereich 194 mit der verformbaren Ausnehmung 192 aufgrund der Eigenelastizität des Spannbandes 118 aus dem in Fig. 20 dargestellten Zustand in den Fig. 19 dargestellten Ausgangszustand zurück, so dass auch in dem in Fig. 19 dargestellten Ausgangszustand die gewünschte Zugkraft in den Spannbändern 118 erhalten bleibt und über die Stapelendelemente 106, 110 auf die Brennstoffzelleneinheiten 102 übertragen wird.

Im übrigen stimmt die in den Fig. 17 bis 20 dargestellte siebte Ausführungsform eines Brennstoffzellenstapels 100 hinsichtlich Aufbau und Funktion mit der in den Fig. 7 bis 11 dargestellten vierten Ausführungsform überein, auf deren vorstehende Beschreibung insoweit Bezug genommen wird.

## Patentansprüche

1. Brennstoffzellenstapel, umfassend mehrere längs einer Stapelrichtung (104) aufeinanderfolgende Brennstoffzelleneinheiten (102) und mindestens eine Spannvorrichtung (114), mittels welcher die Brennstoffzelleneinheiten (102) gegeneinander verspannt werden,
**dadurch gekennzeichnet, dass**
die Spannvorrichtung (114) mindestens ein streifen- oder bandförmiges Zugelement (116) umfasst, das eine Zugkraft für die Verspannung der Brennstoffzelleneinheiten (102) überträgt und sich um mindestens eine Stirnseite des Brennstoffzellenstapels (100) herum erstreckt.

2. Brennstoffzellenstapel nach Anspruch 1, **dadurch gekennzeichnet, dass** die Spannvorrichtung (114) mindestens zwei band- oder streifenförmige Zugelemente (116) umfasst, die sich um mindestens eine Stirnseite des Brennstoffzellenstapels (100) herum erstrecken und in einer quer zur Stapelrichtung (104) verlaufenden Richtung (119) voneinander beabstandet sind.

3. Brennstoffzellenstapel nach einem der Ansprüche 1 oder 2, **dadurch gekennzeichnet, dass** der Brennstoffzellenstapel (100) mindestens ein Stapelendelement (106, 110) umfasst, das eine stirnseitige Begrenzung des Brennstoffzellenstapels (100) bildet.

4. Brennstoffzellenstapel nach Anspruch 3, **dadurch gekennzeichnet, dass** mindestens ein Stapelendelement (106, 110) als eine Endplatte (108, 112) ausgebildet ist.

5. Brennstoffzellenstapel nach einem der Ansprüche 3 oder 4, **dadurch gekennzeichnet, dass** sich mindestens ein Zugelement (116) um mindestens ein Stapelendelement (106, 110) des Brennstoffzellenstapels (100) herum erstreckt.

6. Brennstoffzellenstapel nach Anspruch 5, **dadurch gekennzeichnet, dass** mindestens ein Zugelement (116) an mindestens einem Stapelendelement (106, 110) anliegt.

7. Brennstoffzellenstapel nach Anspruch 6, **dadurch gekennzeichnet, dass** mindestens ein Zugelement (116) im wesentlichen flächig an mindestens einem Stapelendelement (106, 110) anliegt.

8. Brennstoffzellenstapel nach einem der Ansprüche 3 bis 7, **dadurch gekennzeichnet, dass** mindestens ein Zugelement (116) an mindestens einem Stapelendelement (106, 110) festgelegt ist.

9. Brennstoffzellenstapel nach Anspruch 8, **dadurch gekennzeichnet, dass** mindestens ein Zugelement (116) an mindestens einem Stapelendelement (106, 110) stoffschlüssig festgelegt ist.

10. Brennstoffzellenstapel nach einem der Ansprüche 8 oder 9, **dadurch gekennzeichnet, dass** mindestens ein Zugelement (116) mittels mindestens eines Befestigungsmittels, insbesondere mittels mindestens einer Schraube, an mindestens einem Stapelendelement (106, 110) festgelegt ist.

11. Brennstoffzellenstapel nach einem der Ansprüche 3 bis 10, **dadurch gekennzeichnet, dass** mindestens ein Zugelement (116) an mindestens einem Stapelendelement (106, 110) lösbar festgelegt ist.

12. Brennstoffzellenstapel nach einem der Ansprüche 3 bis 11, **dadurch gekennzeichnet, dass** mindestens ein Zugelement (116) an mindestens einem Stapelendelement (106, 110) eingehängt ist.

13. Brennstoffzellenstapel nach Anspruch 12, **dadurch gekennzeichnet, dass** mindestens ein Stapelendelement (106, 110) mindestens eine Einhängenase (126) zum Einhängen des mindestens einen Zugelements (116) aufweist.

14. Brennstoffzellenstapel nach einem der Ansprüche 12 oder 13, **dadurch gekennzeichnet, dass** mindestens ein Zugelement (116) mindestens eine Einhängeöffnung (122) zum Einhängen an mindestens einem Stapelendelement (106, 110) aufweist.

15. Brennstoffzellenstapel nach einem der Ansprüche 1 bis 14, **dadurch gekennzeichnet, dass** mindestens ein Zugelement (116) an mindestens einem seiner Endbereiche (120a, 168a, 168b) an einem anderen Endbereich (120b) desselben Zugelements oder an einem anderen Zugelement festgelegt ist.

16. Brennstoffzellenstapel nach Anspruch 15, **dadurch gekennzeichnet, dass** mindestens ein Endbereich (120a) mindestens eines Zugelements (116) formschlüssig mit einem anderen Endbereich (120b) desselben Zugelements oder mit einem anderen Zugelement verbunden ist.

17. Brennstoffzellenstapel nach einem der Ansprüche 15 oder 16, **dadurch gekennzeichnet, dass** mindestens ein Abschnitt (152) eines Endbereichs (120a) mindestens eines Zugelements (116) durch eine Durchtrittsöffnung (156) in einem anderen Endbereich (120b) desselben Zugelements oder in einem anderen Zugelement hindurchgedrückt und anschließend so verformt worden ist, dass der hindurchgedrückte Abschnitt (152) nicht mehr durch die Durchtrittsöffnung (156) zurückgelangen kann.

18. Brennstoffzellenstapel nach einem der Ansprüche 15 bis 17, **dadurch gekennzeichnet, dass** ein Endbereich (120b) mindestens eines Zugelements (116) mindestens eine Durchtrittsöffnung (156) aufweist und dass ein Abschnitt (152) eines anderen Endbereichs (120a) desselben Zugelements oder ein Abschnitt eines anderen Zugelements durch diese Durchtrittsöffnung (156) hindurchgedrückt und anschließend so verformt worden ist, dass der hindurchgedrückte Abschnitt (152) nicht mehr durch die Durchtrittsöffnung (156) zurückgelangen kann.

19. Brennstoffzellenstapel nach einem der Ansprüche 15 bis 18, **dadurch gekennzeichnet, dass** mindestens ein Endbereich (168a, 168b) mindestens eines Zugelements (116) mittels einer Befestigungsvorrichtung (180) an einem anderen Endbereich desselben Zugelements oder an einem anderen Zugelement festgelegt ist.

20. Brennstoffzellenstapel nach Anspruch 19, **dadurch gekennzeichnet, dass** die Befestigungsvorrichtung (180) mindestens ein Befestigungsmittel umfasst.

21. Brennstoffzellenstapel nach Anspruch 20, **dadurch gekennzeichnet, dass** die Befestigungsvorrichtung (180) mindestens zwei in einer quer zur Stapelrichtung (104) verlaufenden Richtung (119) voneinander beabstandete Befestigungsmittel umfasst.

22. Brennstoffzellenstapel nach einem der Ansprüche 20 oder 21, **dadurch gekennzeichnet, dass** mindestens ein Befestigungsmittel als eine Befestigungsschraube (186) ausgebildet ist.

23. Brennstoffzellenstapel nach einem der Ansprüche 19 bis 22, **dadurch gekennzeichnet, dass** die Befestigungsvorrichtung (180) mindestens eine Befestigungsleiste (182) umfasst, in welche mindestens ein Befestigungsmittel eingreift.

24. Brennstoffzellenstapel nach einem der Ansprüche 19 bis 23, **dadurch gekennzeichnet, dass** die Befestigungsvorrichtung (180) mindestens eine Aufnahmeleiste (184) umfasst, durch welche sich mindestens ein Befestigungsmittel hindurcherstreckt.

25. Brennstoffzellenstapel nach einem der Ansprüche 19 bis 24, **dadurch gekennzeichnet, dass** die Befestigungsvorrichtung (180) mindestens ein Federelement (190) umfasst, welches einen Endbereich (168a, 168b) mindestens eines Zugelements (116) gegen einen anderen Endbereich desselben Zugelements oder gegen einen Endbereich (178a, 178b) eines anderen Zugelements vorspannt.

26. Brennstoffzellenstapel nach einem der Ansprüche 1 bis 25, **dadurch gekennzeichnet, dass** die Spannvorrichtung (114) mindestens ein federndes Längendehnungsausgleichselement (130) umfasst.

27. Brennstoffzellenstapel nach Anspruch 26, **dadurch gekennzeichnet, dass** mindestens ein Längendehnungsausgleichselement (130) in mindestens ein Zugelement (116) integriert ist.

28. Brennstoffzellenstapel nach Anspruch 27, **dadurch gekennzeichnet, dass** mindestens ein Längendehnungsausgleichselement (130) durch einen gewellten und/oder gefalteten Bereich mindestens eines Zugelements (116) gebildet ist.

29. Brennstoffzellenstapel nach einem der Ansprüche 27 oder 28, **dadurch gekennzeichnet, dass** mindestens ein Längendehnungsausgleichselement (130) durch einen mit einer verformbaren Ausnehmung (192) versehenen Bereich (194) mindestens eines Zugelements (116) gebildet ist.

30. Brennstoffzellenstapel nach einem der Ansprüche 1 bis 29, **dadurch gekennzeichnet, dass** der Brennstoffzellenstapel (100) mindestens ein federndes Druckübertragungselement (138) umfasst.

31. Brennstoffzellenstapel nach Anspruch 30, **dadurch gekennzeichnet, dass** mindestens ein Druckübertragungselement (138) zwischen einer Brennstoffzelleneinheit (102) und einem Stapelendelement (106), das eine stirnseitige Begrenzung des Brennstoffzellenstapels (100) bildet, angeordnet ist.

32. Brennstoffzellenstapel nach einem der Ansprüche 1 bis 31, **dadurch gekennzeichnet, dass** der Brennstoffzellenstapel (100) mindestens ein Wärmeisolationselement (148) umfasst.

33. Brennstoffzellenstapel nach Anspruch 32, **dadurch gekennzeichnet, dass** mindestens ein Wärmeisolationselement (148) zwischen den Brennstoffzelleneinheiten (102) und mindestens einem Zugelement (116) angeordnet ist.

34. Brennstoffzellenstapel nach einem der Ansprüche 1 bis 33, **dadurch gekennzeichnet, dass** die Spannvorrichtung (114) mindestens ein streifen- oder bandförmiges Zugelement (116) umfasst, das sich um beide Stirnseiten des Brennstoffzellenstapels (100) herum erstreckt.
